# EUROPEAN PATENT APPLICATION

(11) **EP 4 561 141 A1**
(43) Date of publication of application: **28.05.2025**
(21) Application number: 23870020.7
(22) Date of filing: 15.08.2023
(51) Int. Cl.: H04W 16/28

(54) **BEAM REPORTING METHOD, COMMUNICATION DEVICE, STORAGE MEDIUM AND PROGRAM PRODUCT**

(30) Priority: 30.09.2022 CN 202211207502
(71) Applicant: ZTE Corporation, Shenzhen, Guangdong 518057 (CN)
(72) Inventor: LIU, Wenfeng, Shenzhen, Guangdong 518057 (CN); LU, Zhaohua, Shenzhen, Guangdong 518057 (CN); XIAO, Huahua, Shenzhen, Guangdong 518057 (CN); ZHENG, Guozeng, Shenzhen, Guangdong 518057 (CN); WANG, Yuxin, Shenzhen, Guangdong 518057 (CN); LI, Lun, Shenzhen, Guangdong 518057 (CN); LI, Yong, Shenzhen, Guangdong 518057 (CN)
(74) Representative: Chimini, Francesco
(86) International application number: PCT/CN2023/113121
(87) International publication number: WO 2024/066774

(57) **Abstract**

The present application discloses a beam reporting method, a communication device, a storage medium and a program product. The method comprises: reporting target beam information to a first communication device according to a received high-level parameter, wherein the target beam information may comprise actually detected preferred beam information and predicted preferred beam information, which are reported to the first communication device, so that according to the actually detected preferred beam information and the predicted preferred beam information, the first communication device can sense and monitor the running condition of a model that is running.

## Description

### Cross-Reference to Related Application

This application is based upon and claims the benefit of priority from Chinese Patent Application No. 202211207502.2, filed on September 30, 2022, the entire disclosure of which is incorporated herein by reference.

### Technical Field

The present application relates to the field of communications technologies, and in particular, to a beam reporting method, a communication device, a computer storage medium and a computer program product.

### Background

In the related art, a beam prediction method based on Artificial Intelligence (AI) has been able to reduce reference signal resource overhead of a network system, and User Equipment (UE) measurement power consumption and latency, achieving prediction of one or more preferred beams. However, due to the generalization of the running models, the beam prediction may change with the variation of time, environment, or channel conditions. Once the running model is not able to adapt to these changes, beam prediction performance and reliability of the running model will be influenced.

### Summary

Embodiments of the present application provide a beam reporting method, a communication device, a computer storage medium and a computer program product, which may improve beam prediction performance and reliability of a running model.

According to a first aspect, the embodiments of the present application provide a beam reporting method, including: reporting target beam information to a first communication device according to a received high-layer parameter, wherein in a case where the high-layer parameter includes a group-based beam reporting parameter, measured preferred beam information is reported to the first communication device through first group information, and predicted preferred beam information is reported to the first communication device through second group information.

According to a second aspect, the embodiments of the present application provide a communication device, including: at least one processor; and at least one memory for storing at least one program, wherein the at least one program, when being executed by the at least one processor, causes the at least one processor to execute the foregoing beam reporting method.

According to a third aspect, the embodiments of the present application provide a computer readable storage medium, which stores a program executable by a processor, wherein the program executable by the processor, when being executed by the processor, causes the processor to perform the foregoing beam reporting method.

According to a fourth aspect, the embodiments of the present application provide a computer program product, including a computer program or computer instructions, wherein the computer program or the computer instructions are stored in a computer readable storage medium, a processor of a computer device reads the computer program or the computer instructions from the computer readable storage medium, and executes the computer program or the computer instructions, so that the computer device executes the foregoing beam reporting method.

According to the beam reporting method, the communication device, the storage medium and the program product provided by the embodiments of the present application, target beam information is reported to a first communication device according to a received high-layer parameter, wherein the target beam information may include measured preferred beam information and predicted preferred beam information which are reported to the first communication device, so that the first communication device is enabled to sense and monitor a running condition of a running model according to the measured preferred beam information and the predicted preferred beam information. In this way, the running model can better adapt to changes in environments or channels, so that operations such as activation, deactivation, model switching, and rollback may be performed on the running model, thereby improving the beam prediction performance and reliability of the running model.

### Brief Description of the Drawings

Fig. 1 is a schematic diagram of an implementation environment of a beam reporting method according to an embodiment of the present application;
Fig. 2 is a flowchart of a beam reporting method according to an embodiment of the present application;
Fig. 3 is a schematic diagram of measured preferred beam information and predicted preferred beam information according to an embodiment of the present application;
Fig. 4 is a schematic diagram of measured preferred beam information and predicted preferred beam information according to another embodiment of the present application;
Fig. 5 is a schematic diagram of measured preferred beam information and predicted preferred beam information according to another embodiment of the present application;
Fig. 6 is a schematic diagram of measured preferred beam information and predicted preferred beam information according to another embodiment of the present application;
Fig. 7 is a flowchart of a beam reporting method according to another embodiment of the present application;
Fig. 8 is a schematic diagram of target beam information according to an embodiment of the present application;
Fig. 9 is a schematic diagram of target beam information according to another embodiment of the present application;
Fig. 10 is a schematic diagram of target beam information according to another embodiment of the present application;
Fig. 11 is a schematic diagram of target beam information according to another embodiment of the present application;
Fig. 12 is a flowchart of a beam reporting method according to another embodiment of the present application;
Fig. 13 is a schematic diagram of a communication device according to an embodiment of the present application.

### Detailed Description of the Embodiments

To make the objectives, technical solutions, and advantages of the present application clearer and more comprehensible, the following further describes the technical solution in detail with reference to the accompanying drawings and examples. It should be understood that the exemplary embodiments described herein are only intended to explain the present application, but not to limit the present application.

It should be noted that, although functional module division is shown in a schematic diagram of the device and a logic sequence is shown in the flowchart, in some cases, a module division different from that in the device shown in the schematic diagram may be adopted, or the shown or described operations may be executed in a sequence different from that shown in the flowchart. The terms "first" and "second" in the description, the claims, and the accompanying drawings are used to distinguish similar objects, and are not necessarily used to describe a specific sequence or order.

The words "further", "exemplarily" or "optionally" in the embodiments of the present application are used for illustration, example or description, and should not be construed as preferable or advantageous over other embodiments or design solutions. The use of words "further", "exemplarily" or "optionally" is intended to present relevant concepts in a concrete manner.

In related art, the next generation of cellular networks will utilize the millimeter wave band to significantly increase network capacity. However, the millimeter wave band suffers from high propagation loss, poor reflection and diffraction performance, and transmission channels that are susceptible to blocking, which poses new challenges for the design of communication protocol stacks and greatly affects the end-to-end performance and user service quality of the network. To address this problem, in millimeter wave communication systems, a large-scale antenna array is generally used to form a shaped beam with a larger gain, so as to compensate transmission loss and ensure system coverage. Additionally, both users and base stations need to adjust their beams and achieve precise alignment during initial access and data transmission processes to ensure maximum gain. The 3rd Generation Partnership Project (3GPP) has established a comprehensive set of beam management procedures to adjust beam directions in high-frequency bands and maintain a suitable transmit-receive beam pair, including beam scanning, beam measurement, beam reporting, and beam indication.

In a typical beam management process, a base station configures multiple reference signal resources for beam measurement to a terminal, wherein the reference signal resources include Channel State Information-Reference Signal (CSI-RS) or Synchronization Signal and PBCH block (SSB), and are carried on different downlink transmission beams. The terminal measures these reference signals and reports the beam measurement results back to the base station.

A report parameter of beam measurement includes a reference signal resource index (e.g., Selected SSB Resource Index/CSI-RS Resource Index (SSBRI/CRI)), a Physical-Layer Reference Signal Received Power (L1-RSRP) or a Physical-Layer Signal to Interference plus Noise Ratio (L1-SINR) corresponding to one or more sending beams selected by the terminal.

Since beams are typically selected from a predetermined analog beam codebook, exhaustively scanning all beam pairs in the codebook represents an optimal beam training scheme. However, this can lead to excessive training overhead, measurement power consumption, and processing delay. In beam management methods based on a running model, the base station only needs to transmit reference signals on a subset of the beam space and uses the running model to predict full beam space information and the optimal beam pair, thereby effectively reducing beam training overhead. However, due to the generalization of the running models, the beam prediction may change with the variation of time, environment, or channel conditions. Once the running model is not able to adapt to these changes, beam prediction performance and reliability of the running model will be influenced.

Based on this, the embodiments of the present application provide a beam reporting method, a communication device, a storage medium and a program product. A beam reporting method according to an embodiment includes: reporting target beam information to a first communication device according to a received high-layer parameter, wherein in a case where the high-layer parameter includes a group-based beam reporting parameter, measured preferred beam information is reported to the first communication device through first group information, and predicted preferred beam information is reported to the first communication device through second group information. In this embodiment, target beam information is reported to a first communication device according to a received high-layer parameter, wherein the target beam information may include measured preferred beam information and predicted preferred beam information which are reported to the first communication device, so that the first communication device is enabled to sense and monitor a running condition of a running model according to the measured preferred beam information and the predicted preferred beam information. In this way, the running model can better adapt to changes in environments or channels, so that operations such as activation, deactivation, model switching, and rollback may be performed on the running model, thereby improving the beam prediction performance and reliability of the running model.

The embodiments of the present application will be further described below with reference to the accompanying drawings.

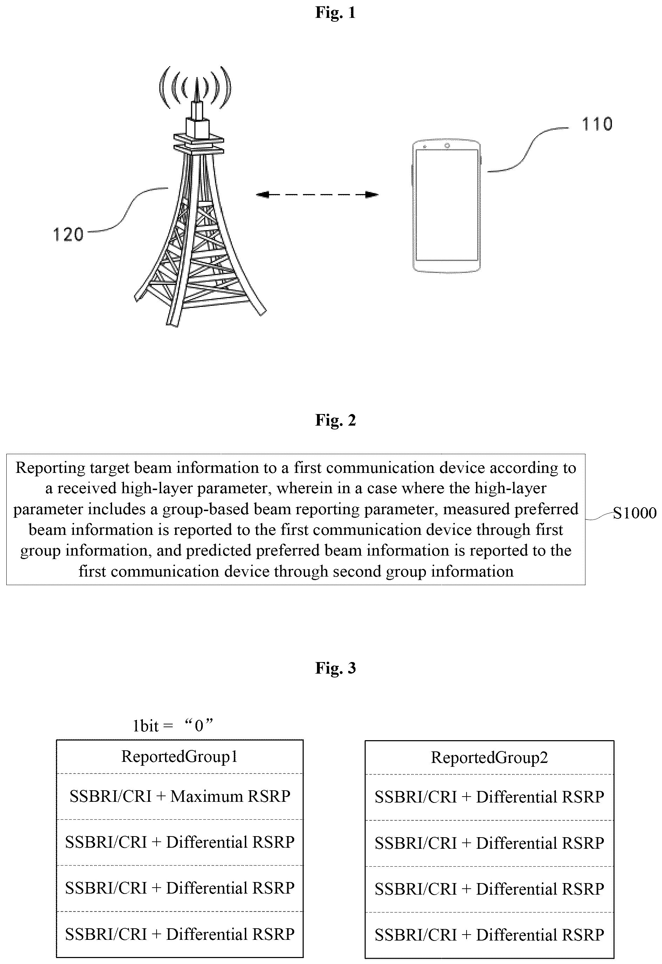

Fig. 1 is a schematic diagram of an implementation environment of a beam reporting method according to an embodiment of the present application.

In the example of Fig. 1, the implementation environment includes a second communication device 110 and a first communication device 120, wherein transmission and reception of a wireless signal may be performed between the first communication device 120 and the second communication device 110.

It should be noted that, relative positions of the first communication device 120 and the second communication device 110 may be set correspondingly in a specific application scenario. For example, the second communication device 110 may move along a radiation sphere formed by the first communication device 120 when radiating signals externally. In other words, if there are multiple second communication devices 110 and different second communication devices 110 are set up in the aforementioned manner, these second communication devices 110 can receive the wireless signals sent by the first communication device 120 at different spatial positions. It is worth noting that these spatial positions may be different geographical conditions.

In an embodiment, when the second communication device 110 is a terminal (also known as User Equipment (UE)), the first communication device 120 may be, but is not limited to be, a base station. The base stations in the embodiments of the present application may be an evolved NodeB (eNB), a Transmission Reception Point (TRP), a Next Generation NodeB (gNB) in the NR system, a base station in other future mobile communication systems, or an access node in a Wireless Fidelity (WiFi) system, etc. The embodiments of the present application do not limit the specific technologies and specific device forms used by each communication device. The UE may also be referred to as an access terminal, a user unit, a user station, a mobile station, a mobile terminal, a remote station, a remote terminal, a mobile device, a user terminal, a wireless communication device, a user agent, or a user device. For example, the UE may be a cellular phone, a cordless phone, a Session Initiation Protocol (SIP) phone, a Wireless Local Loop (WLL) station, a Personal Digital Assistant (PDA), a handheld device with a wireless communication function, a computing device or other processing device connected to a wireless modem, an in-vehicle device, a wearable device, a terminal devices in 5G networks or future networks beyond 5G, etc., this embodiment does not make a specific limitation on the specific form of the UE.

It should be noted that the beams in the embodiments of the present application are merely for convenience of description, and should not be considered as any limitation thereto.

A sending beam in the embodiments of the present application indicates a sending mode, and a sending mode parameter thereof includes at least one of the following:
- Transmission beam;
- Transmission antenna;
- Transmission sector;
- Precoding at the transmission end;
- Antenna port;
- Antenna weight vector;
- Antenna weight matrix;
- Sending mode corresponding to a space division multiplexing mode;
- Sending mode corresponding to frequency domain diversity transmission;
- Sending mode corresponding to time domain diversity transmission;
- Transmission sequence;
- Number of layers transmitted;
- Transmission mode;
- Modulation and Coding Scheme;
- Reference signal;
- Transmission filtering.

A receiving beam in the embodiments of the present application indicates a receiving mode, and a receiving mode parameter thereof includes at least one of the following:
- Reception beam;
- Reception antenna;
- Reception antenna panel;
- Reception sector;
- Reception filtering.

The second communication device 110 at least has functions such as reporting target beam information to the first communication device 120 according to a received high-layer parameter, wherein in a case where the high-layer parameter includes a group-based beam reporting parameter, the second communication device 110 at least has functions such as reporting measured preferred beam information to the first communication device 120 through first group information, and reporting predicted preferred beam information to the first communication device 120 through second group information.

The first communication device 120 at least has functions such as pre-configuring a high-layer parameter and sending the pre-configured high-layer parameter to the second communication device 110, wherein the pre-configured high-layer parameter is used for enabling the second communication device 110 to report the target beam information to the first communication device 120, in a case where the high-layer parameter includes a group-based beam reporting parameter, the second communication device 110 is enabled to report the measured preferred beam information to the first communication device 120 through the first group information, and report the predicted preferred beam information to the first communication device 120 through the second group information.

It should be noted that the foregoing functions of the first communication device 120 and the second communication device 110 may be applied to different application scenarios, which are not limited herein.

Those having ordinary skill in the art may understand that this implementation environment may be applied to 5G and 6G communication network systems and a subsequent evolved mobile communication network system, which is not specifically limited in the embodiments of the present application.

Those having ordinary skill in the art may understand that the implementation environment shown in Fig. 1 does not limit the embodiments of the present application, and may include more or fewer components than those shown in the figure, or combine some components, or have different component arrangements.

Based on the implementation environment shown in Fig. 1, various embodiments of the beam reporting method of the present application are described below.

As shown in Fig. 2, Fig. 2 is a flowchart of a beam reporting method according to an embodiment of the present application, the beam reporting method may be applied to, but is not limited to, the second communication device 110 in the implementation environment shown in Fig. 1. The beam reporting method may include, but is not limited to, operation S1000.

In operation S1000, target beam information is reported to a first communication device according to a received high-layer parameter, wherein in a case where the high-layer parameter includes a group-based beam reporting parameter, measured preferred beam information is reported to the first communication device through first group information, and predicted preferred beam information is reported to the first communication device through second group information.

It should be noted that the second communication device in this embodiment may be, but is not limited to be, a UE, and the first communication device in this embodiment may be, but is not limited to be, a base station. Alternatively, those having ordinary skill in the art may select to set a corresponding first communication device or a corresponding second communication device according to an actual application scenario, which is not limited in this embodiment. To describe the application scenario and the operation principle of the present application more conveniently, the following embodiments are described by taking the UE being the second communication device and the base station being the first communication device as an example, but this example shall not be construed as a limitation to the embodiments of the present application.

In this operation, target beam information is reported to a first communication device according to a received high-layer parameter, and since the high-layer parameter includes a group-based beam reporting parameter, measured preferred beam information is reported to the first communication device through first group information, and predicted preferred beam information is reported to the first communication device through second group information, so that the first communication device is enabled to sense and monitor a running condition of a running model according to the measured preferred beam information and the predicted preferred beam information. In this way, the running model can better adapt to changes in environments or channels, so that operations such as activation, deactivation, model switching, and rollback may be performed on the running model, thereby improving the beam prediction performance and reliability of the running model.

In an embodiment, the type and quantity of the high-layer parameters may be set correspondingly according to a specific application scenario, which is not limited herein. For example, the base station may enable a group-based reporting mode through a high-layer parameter such as groupBasedBeamReporting or groupBasedBeamReporting-r17, and the relevant number of groups (nrofReportedGroups), the number of beams (nrofReportedRS) in each group and a reporting parameter reportQuantity may all be configured. It should be noted that the number of beams and reporting parameters of all the groups may be consistent or may also be inconsistent. For example, it is specified in the 5G NR standard that a terminal capable of receiving two different reference signals (also referred to as sending beams) at the same time may be configured with group-based beam reporting, and thus in a 5G NR application scenario, high-layer parameters may be configured to implement group-based beam reporting.

In an embodiment, there are one or more pieces of the measured preferred beam information, and each piece of the measured preferred beam information includes at least one of a measured preferred reference signal resource index (also referred to as a measured preferred SSBRI/CRI), a measured preferred reference signal received power (also referred to as a measured preferred RSRP), or a measured physical-layer signal to interference plus noise ratio (also referred to as a measured SINR); and/or there are one or more pieces of the predicted preferred beam information, and each piece of the predicted preferred beam information includes at least one of a predicted preferred reference signal resource index (also referred to as a predicted preferred SSBRI/CRI), a predicted preferred reference signal received power (also referred to as a predicted preferred RSRP), or a predicted physical-layer signal to interference plus noise ratio (also referred to as a predicted SINR).

In an embodiment, a model based on beam prediction may be a model running on a UE, and may also be a model running on a base station, and the types of the model are not limited and may be selectively configured according to a specific application scenario. For example, the model based on beam prediction may be configured to be an Artificial Intelligence (AI) model, a neural network model, and the like, which is not limited herein.

In an embodiment, the UE adopts a group-based reporting mode in a report instance to simultaneously report measured preferred beam information obtained by beam measurement and predicted preferred beam information derived from inference of a model running on the UE, wherein the number of beams, the reporting parameter and the quantification accuracy of different reported beam groups may be different, and exemplary embodiments are given below to explain one by one.

In an embodiment of the present application, the beam reporting method may further include, but is not limited to, operation S2000.

In operation S2000, reference signal indication information is reported to the first communication device, wherein the reference signal indication information indicates that a reference signal received power with a maximum numerical value is in a first position of the first group information or in a first position of the second group information.

In this operation, reference signal indication information is reported to a base station, and since the reference signal indication information indicates that a reference signal received power with a maximum numerical value is in a first position of the first group information or in a first position of the second group information, the base station can determine a beam group where the maximum reported reference signal received power is located, and determine optimal beam information from the reported first group information or second group information.

In an embodiment, in a case where the reference signal indication information indicates that the reference signal received power with the maximum numerical value is in the first position of the first group information, the measured preferred beam information includes first measured beam information and second measured beam information, wherein the first measured beam information includes a first measured reference signal resource index and a first measured reference signal received power, and the second measured beam information includes a second measured reference signal resource index and a first reference signal received power difference, the first reference signal received power difference being a difference value between the first measured reference signal received power and a second measured reference signal received power corresponding to the second measured reference signal resource index, and the first measured reference signal received power being not less than the second measured reference signal received power; the predicted preferred beam information includes a third predicted reference signal resource index and a second reference signal received power difference, the second reference signal received power difference being a difference value between the first measured reference signal received power and a third predicted reference signal received power corresponding to the third predicted reference signal resource index, and the first measured reference signal received power being not less than the third predicted reference signal received power. It can be explicitly known that, in the case where the reference signal indication information indicates that the reference signal received power with the maximum numerical value is in the first position of the first group information, all the measured reference signal resource indexes in the first group information are reported in a unified manner, and all the predicted reference signal resource indexes in the second group information are reported in a unified manner. Except that the first measured reference signal received power is reported as optimal beam information, the remaining measured reference signal received power is reported in a differential form (i.e., the first reference signal received power difference). Since there is no maximum predicted reference signal received power in the second group information, all the predicted reference signal received power is reported in a differential form (i.e., the second reference signal received power difference).

In an embodiment, in a case where the reference signal indication information indicates that the reference signal received power with the maximum numerical value is in the first position of the second group information, the predicted preferred beam information includes first predicted beam information and second predicted beam information, wherein the first predicted beam information includes a first predicted reference signal resource index and a first predicted reference signal received power, and the second predicted beam information includes a second predicted reference signal resource index and a third reference signal received power difference, the third reference signal received power difference being a difference value between the first predicted reference signal received power and a second predicted reference signal received power corresponding to the second predicted reference signal resource index, and the first predicted reference signal received power being not less than the second predicted reference signal received power; the measured preferred beam information includes a third measured reference signal resource index and a fourth reference signal received power difference, the fourth reference signal received power difference being a difference value between the first predicted reference signal received power and a third measured reference signal received power corresponding to the third measured reference signal resource index, and the first predicted reference signal received power being not less than the third measured reference signal received power. It can be explicitly known that, in the case where the reference signal indication information indicates that the reference signal received power with the maximum numerical value is in the first position of the second group information, all the measured reference signal resource indexes in the first group information are reported in a unified manner, and all the predicted reference signal resource indexes in the second group information are reported in a unified manner. Except that the first predicted reference signal received power is reported as optimal beam information, the remaining predicted reference signal received power is reported in a differential form (i.e., the third reference signal received power difference). Since there is no maximum measured reference signal received power in the first group information, all the measured reference signal received power is reported in a differential form (i.e., the fourth reference signal received power difference).

It should be noted that, for different beam information, the corresponding measured reference signal resource index, measured reference signal received power, measured reference signal resource index, and measured reference signal received power may be separate and independent of each other.

Specific examples are given below to describe the operation principle of the above relevant embodiments more clearly.

### Example 1:

A base station enables a group-based reporting mode through a high-layer parameter. Two beam groups are "ReportedGroup1" and "ReportedGroup2", which respectively represent the first group information and the second group information in the embodiments of the present application (but without specifically distinguishing which beam group is the first group information or the second group information). The UE respectively reports, in the two groups, measured preferred beam information obtained by beam measurement and predicted preferred beam information derived from inference of the running model, while using an additional 1 bit (i.e., the reference signal indication information in the foregoing embodiments) to indicate a reporting beam group where the maximum reference signal received power is located. As shown in Fig. 3, when the additional 1 bit indicates "0", it represents that the maximum reference signal received power is reported at the first position of the first beam group, and all the remaining reference signal received power is reported in a differential form taking the maximum reference signal received power as a reference. In the other case, when the additional 1 bit indicates "1", it represents that the maximum reference signal received power is reported at the first position of the second beam group, and all the remaining reference signal received power is reported in a differential form taking the maximum reference signal received power as a reference.

In an embodiment of the present application, the beam reporting method may further include, but is not limited to, operation S3000.

In operation S3000, intra-group beam number indication information sent by the first communication device is received, wherein the intra-group beam number indication information indicates a number of pieces of the measured preferred beam information carried by the first group information and a number of pieces of the predicted preferred beam information carried by the second group information.

In this operation, the intra-group beam number indication information sent by the base station is received, so that the first group information carrying a corresponding number of pieces of measured preferred beam information and the second group information carrying a corresponding number of pieces of predicted preferred beam information are sent to the base station according to the intra-group beam number indication information.

It should be noted that the numbers of pieces of the preferred beam information carried in different group information are independent of each other, that is to say, the indicated number of pieces of the measured preferred beam information carried in the first group information and the indicated number of pieces of the predicted preferred beam information carried in the second group information may be the same or different, which is not limited herein.

### Example 2:

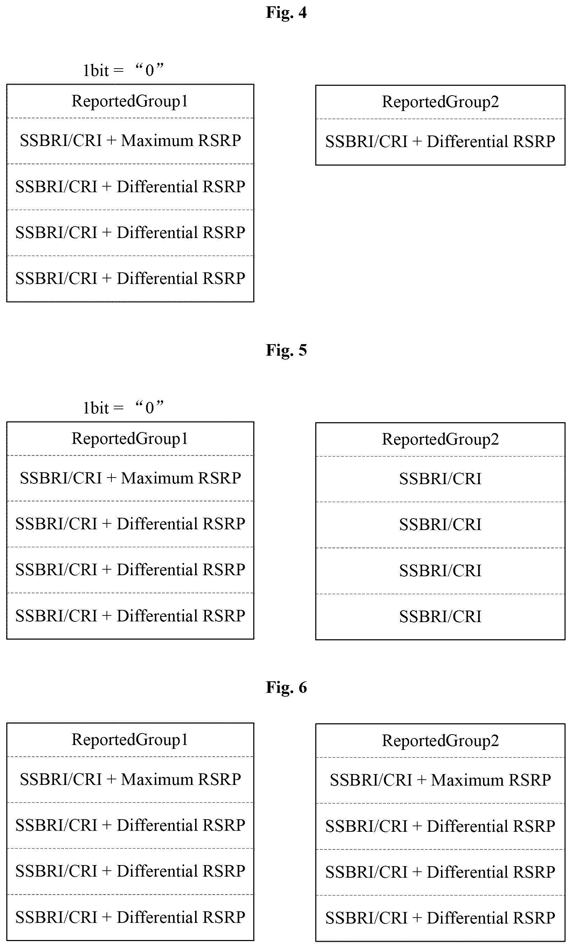

A base station enables a group-based reporting mode through a high-layer parameter. Intra-group beam number indication information is configured for each group so as to indicate the number of reporting beams of a corresponding group. As shown in Fig. 4, the base station configures two groups "ReportedGroup1" and "ReportedGroup2", the number of beams of the first group is 4, and the number of beams of the second group is 1.

In an embodiment of the present application, the beam reporting method may further include, but is not limited to, operation S4000.

In operation S4000, reporting parameter type indication information sent by the first communication device is received, wherein the reporting parameter type indication information indicates a type of beam measurement information carried by the first group information and a type of beam measurement information carried by the second group information.

In this operation, the reporting parameter type indication information sent by the base station is received, so that the first group information carrying the beam measurement information of the corresponding type and the second group information carrying the beam measurement information of the corresponding type are sent to the base station according to the reporting parameter type indication information.

It should be noted that, there may be one or more types of beam measurement information carried in different group information, and the beam measurement information carried in different group information may be configured or set according to a specific situation, which is not limited herein.

In an embodiment, the type of the beam measurement information includes: a reference signal resource index and a reference signal received power; or a reference signal resource index and a physical-layer signal to interference plus noise ratio; or a reference signal resource index.

### Example 3:

A base station enables a group-based reporting mode through a high-layer parameter. Reporting parameter type indication information is configured for each group to indicate a reporting parameter of a corresponding group.

As shown in Fig. 5, the base station configures two groups "ReportedGroup1" and "ReportedGroup2", the beam reporting parameter of the first group is a reference signal resource index and a reference signal received power, and the beam reporting parameter of the second group is a reference signal resource index.

In an embodiment, a number of quantization bits of the measured preferred beam information and a number of quantization bits of the predicted preferred beam information are different.

In an embodiment, in a case where the number of the quantization bits of the measured preferred beam information and the number of the quantization bits of the predicted preferred beam information are different, the measured preferred beam information includes fourth measured beam information and fifth measured beam information, wherein the fourth measured beam information includes a fourth measured reference signal resource index and a fourth measured reference signal received power, and the fifth measured beam information includes a fifth measured reference signal resource index and a fifth reference signal received power difference, the fifth reference signal received power difference being a difference value between the fourth measured reference signal received power and a fifth measured reference signal received power corresponding to the fifth measured reference signal resource index, and the fourth measured reference signal received power being not less than the fifth measured reference signal received power; the predicted preferred beam information includes fourth predicted beam information and fifth predicted beam information, wherein the fourth predicted beam information includes a fourth predicted reference signal resource index and a fourth predicted reference signal received power, and the fifth predicted beam information includes a fifth predicted reference signal resource index and a sixth reference signal received power difference, the sixth reference signal received power difference being a difference value between the fourth predicted reference signal received power and a fifth predicted reference signal received power corresponding to the fifth predicted reference signal resource index, and the fourth predicted reference signal received power being not less than the fifth predicted reference signal received power. It can be seen that, in consideration of the situation that the number of quantization bits of preferred beam information in different group information is different, beam information corresponding to the maximum reference signal received power is selected from each group information for reporting, and beam information corresponding to the remaining reference signal received power in the group information is reported in a differential form, so as to ensure the quality of beam information reporting.

### Example 4:

A base station enables a group-based reporting mode through a high-layer parameter. The base station configures two groups "ReportedGroup1" and "ReportedGroup2", and the UE respectively reports, in the two groups, measured preferred beam information obtained by beam measurement and predicted preferred beam information derived from inference of the model. Considering that the number of quantization bits of the beam quality information in different groups may be different, as shown in Fig. 6, in beam reporting, the maximum reference signal received power is respectively selected for each group and is reported as an absolute value, and the other reference signal received power is reported in a differential form with reference to the maximum reference signal received power in the same group.

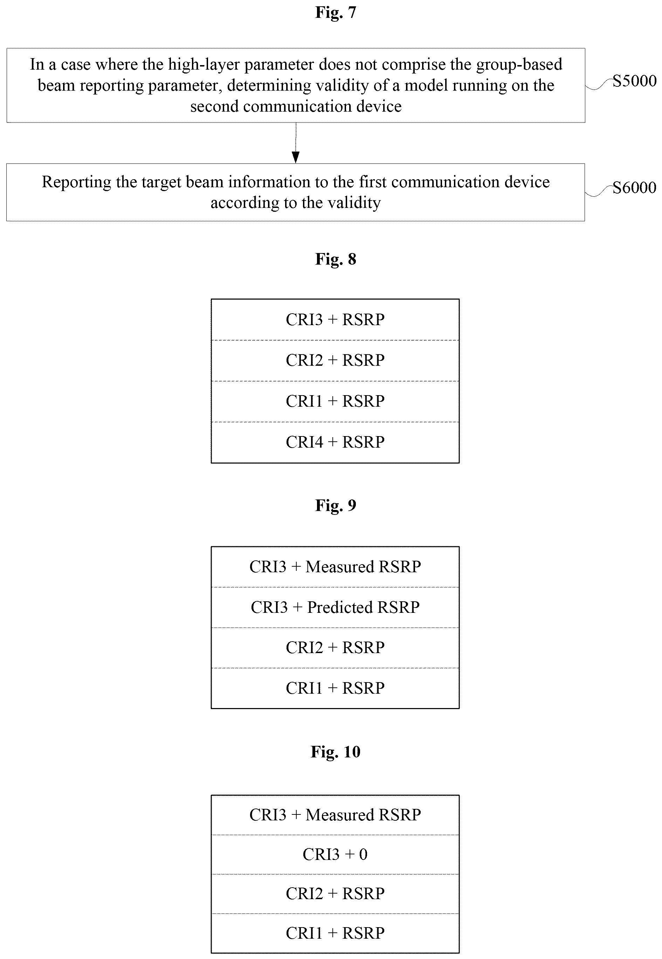

As shown in Fig. 7, in an embodiment of the present application, the beam reporting method may further include, but not limited to, operations S5000 to S6000.

In operation S5000, in a case where the high-layer parameter does not include the group-based beam reporting parameter, validity of a model running on the second communication device is determined.

In operation S6000, the target beam information is reported to the first communication device according to the validity.

In this operation, on the basis that no additional reporting parameter is added, the validity of a model running on the UE is determined, and target beam information is reported to the base station according to the validity, so that the base station can better sense and monitor performance and reliability of the model running on the UE, thereby facilitating operations such as deactivation, model switching, and fallback with respect to the model running on the UE.

In an embodiment, during beam measurement, the UE needs to monitor and estimate beam quality information of all beam pairs, but does not need to report beam quality of all beam pairs to the base station, and only needs to report an optimal beam in all beam pairs.

Specifically, the base station may configure, based on the existing protocol and according to system load and requirements, the number L of beams that the UE needs to report and the reporting parameter through high-layer parameters such as nrofReportedRS and reportQuantity. When L=1, the UE only reports the optimal beam among all downlink sending beams. When L>1, the UE autonomously selects to report the optimal or most suitable L sending beams among all downlink sending beams. The reporting parameter includes a reference signal resource index and a reference signal received power, wherein the reference signal resource index and the reference signal received power are in one-to-one correspondence.

In an embodiment, in a case where the validity is invalid, the target beam information includes one or more pieces of mutually different measured preferred beam information. That is to say, when a base station receives one or more pieces of mutually different measured preferred beam information but does not receive predicted preferred beam information, the base station can determine that a model running on the UE fails, and thus the UE cannot send the predicted preferred beam information to the base station.

### Example 5:

In order to carry the information about whether the model is valid in the report, the UE may respectively adopt different reporting policies when the model is valid and when the model is invalid, thereby implicitly indicating whether the model running on the UE is valid. As shown in Fig. 8, when a UE determines that a running model has failed, the UE reports, according to a traditional reporting method, reference signal resource indexes (i.e., CR1, CR2, CR3 and CR4 as shown in Fig. 8) corresponding to L different sending beams and reference signal received power obtained through measurement. Based on the situation that the UE reports beam measurement results of different beams, the base station can determine that the model running on the UE has failed.

In an embodiment, in a case where the validity is valid, the target beam information includes measured preferred beam information and predicted preferred beam information corresponding to a same reference signal resource index. That is to say, when the base station receives both the measured preferred beam information and the predicted preferred beam information, the base station can determine that the model running on the UE is in a valid state of normal operation.

In an embodiment, in a case where the target beam information includes the measured preferred beam information and the predicted preferred beam information corresponding to the same reference signal resource index, the measured preferred beam information includes the reference signal resource index and a measured reference signal received power, and the predicted preferred beam information includes the reference signal resource index and a predicted reference signal received power; or, the measured preferred beam information includes the reference signal resource index and a measured physical-layer signal to interference plus noise ratio, and the predicted preferred beam information includes the reference signal resource index and a predicted physical-layer signal to interference plus noise ratio; or, the measured preferred beam information includes the reference signal resource index and a measured reference signal received power, and the predicted preferred beam information includes the reference signal resource index; or, the measured preferred beam information includes the reference signal resource index and a measured physical-layer signal to interference plus noise ratio, and the predicted preferred beam information includes the reference signal resource index. It can be seen that, based on the fact that the UE reports the same beam multiple times in the same report instance, the base station can determine that the model running on the UE is still valid.

### Example 6:

When the UE determines that the model running on the UE is still valid, the UE uses a new reporting method, that is, reporting the same beam (including a reference signal resource index and a reference signal received power) multiple times in the same report instance. As shown in Fig. 9, the UE reports two pieces of beam quality information corresponding to the same beam index CR13, which respectively correspond to beam information obtained by beam measurement and beam information derived from beam prediction. Based on the fact that the UE reports the same beam multiple times in the same report instance, the base station can determine that the model running on the UE is still valid.

### Example 7:

When the UE determines that the model running on the UE is still valid, the UE uses a new reporting method to report the same beam multiple times in the same report instance, and directly report the reference signal received power corresponding to the optimal beam derived from beam prediction as 0. As shown in Fig. 10, when the model running on the UE can only predict the beam index CRI3 corresponding to the preferred beam but cannot predict the corresponding reference signal received power, the UE reports the reference signal received power of the optimal beam derived from beam prediction as 0. Based on the fact that the UE reports the same beam multiple times in the same report instance, the base station can determine that the model running on the UE is still valid.

In an embodiment, in a case where the measured preferred beam information includes the reference signal resource index and the measured reference signal received power, and the predicted preferred beam information includes the reference signal resource index, other bits in the predicted preferred beam information except bits occupied by the reference signal resource index are used as extension bits for reporting the measured reference signal received power or extension bits for reporting other reference signal received power. This improves reporting precision at the UE.

### Example 8:

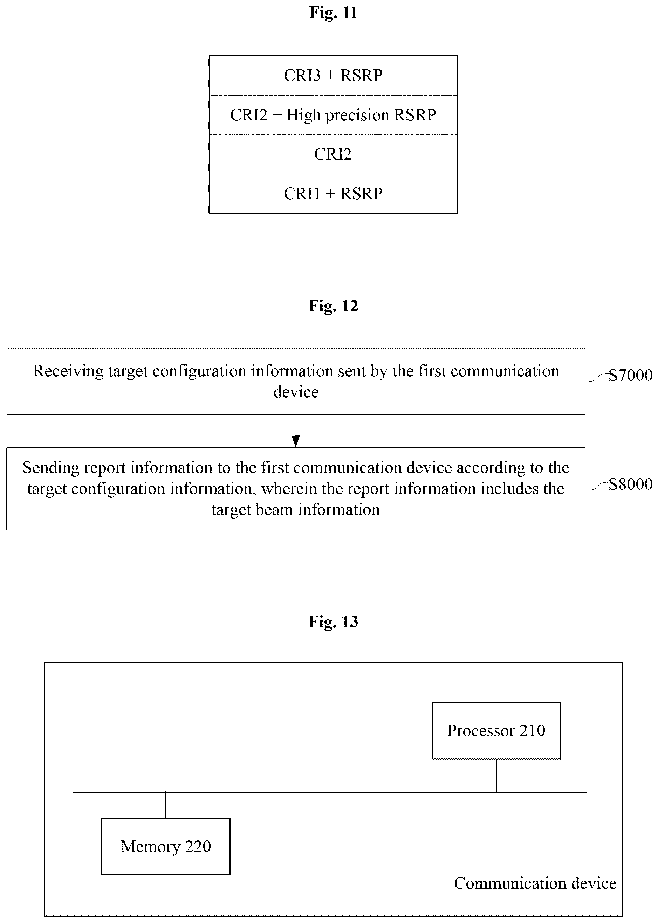

When the UE determines that the model running on the UE is still valid, the UE uses a new reporting method to report the same beam multiple times in the same report instance, wherein the reference signal received power corresponding to the optimal beam derived from beam prediction does not need to be reported, and the excessive bits are used for improving the number of quantization bits of the reference signal received power of the same reporting beam or of an adjacent reporting beam or of the remaining reporting beams, thus, reporting precision is improved. As shown in Fig. 11, the UE does not report the reference signal received power corresponding to the predicted preferred beam index CRI2, but uses extra bits of CRI2 to improve the number of RSRPs quantized bits of the same reported beam. Based on the fact that the UE reports the same beam multiple times in the same report instance, the base station can determine that the model running on the UE is still valid.

As shown in Fig. 12, the beam reporting method according to an embodiment of the present application may further include, but is not limited to, operation S7000 and operation S8000.

In operation S7000, target configuration information sent by the first communication device is received.

In operation S8000, report information is sent to the first communication device according to the target configuration information, wherein the report information includes the target beam information.

Due to the generalization of the running models, the performance of the model running on the UE may change with time or environmental changes, and the number of required model input beams may also change. In this operation, target configuration information is added in the report configuration, so that the UE can directly feed back information about whether a model running on the UE is valid and the number of reference signal resources required for model inference, thereby realizing effective management of the models running on the UE with lower reporting overhead.

In an embodiment, the target configuration information includes model validity information, wherein the model validity information indicates to carry, in the report information, validity information of a model running on the second communication device. In other words, the base station enables, by indicating the model validity information, the UE to send the validity information about the model running on the UE to the base station, so as to realize further perception and observation of the model running on the UE.

In an embodiment, a value of the validity information being a first preset value indicates that validity of the model running on the second communication device is valid.

In an embodiment, a value of the validity information being a second preset value indicates that the validity of the model running on the second communication device is invalid.

It should be noted that the first preset value and the second preset value may be set correspondingly according to a specific application scenario, which is not limited herein.

In a specific example, the base station adds a new field in the report configuration to require the UE to report whether the model running on the UE is valid. For example, when an AI model runs on the UE, since the UE has more beam measurement information, the UE can autonomously determine whether the beam prediction performance of the AI model is reliable, and feed back whether the running model is valid in beam reporting, thereby facilitating the base station to further perform resource configuration or model switching. For example, when the UE reports bit information "1", it indicates that the AI model running on the UE is valid; and when the UE reports bit information "0", it indicates that the AI model running on the UE is invalid.

In an embodiment, the target configuration information includes reference signal resource quantity information, wherein the reference signal resource quantity information indicates to carry, in the report information, a number of reference signal resources required by a model running on the second communication device. It can be understood that, the base station adds new field information in the report configuration to require the UE to report the number of reference signal resources required by the inference of the model. Based on this information, the base station may send more test beams so that the UE can obtain more beam measurement results, thereby improving the inference accuracy of the model running on the UE. With the change of time or environment, when the model running on the UE performs beam prediction, the required input data or beam information may be different. Therefore, the UE can report the number of reference signal resources required for the inference of the model, and the base station configures the corresponding number of reference signal resources according to the information reported by the UE, thereby facilitating inference and beam prediction of the model running on the UE.

In an embodiment, the target configuration information includes beam position indication information, wherein the beam position indication information indicates to carry, in the report information, preferred beam information of a corresponding position. It can be understood that the base station provides beam position indication information in the report configuration to indicate a specific beam position required to be reported by the UE. The indication information may be a specific reference signal resource index (i.e., a beam ID). The base station requires the UE to report a beam measurement result of a corresponding position according to the beam position indication information, in this way, the beam measurement result can be used as a model input to facilitate model trimming or model updating of the model running on the base station.

In an embodiment, the target configuration information includes reference signal resource index information obtained by configuring a reporting parameter, wherein the reference signal resource index information indicates to carry, in the report information, a reference signal resource index corresponding to a preferred beam. It can be understood that the base station adds a reporting parameter "SSBRI/CRI" to the reportQuantity field of the reporting configuration. Specifically, the model running on the UE may only predict the reference signal resource index corresponding to the preferred beam, but cannot predict the reference signal received power corresponding to the preferred beam. Therefore, considering the above situation, the base station may add a new report parameter SSBRI/CRI in the report configuration, so as to require the UE to report the reference signal resource index corresponding to one or more optimal beams.

In an embodiment, the target configuration information includes reference signal received power information obtained by configuring a reporting parameter, wherein the reference signal received power information indicates to carry, in the report information, a reference signal received power corresponding to a preferred beam. It can be understood that the base station may add a reporting parameter "RSRP" in the reportQuantity field of the reporting configuration. Specifically, when a base station already knows beam indexes to be reported by a UE, for example, when the base station already knows that the UE needs to report a measurement result of all sending beams or a measurement result of a designated beam, the UE only needs to report the reference signal received power of a corresponding beam, and does not need to report a corresponding reference signal resource index, thereby saving reporting overhead.

In an embodiment, the target configuration information includes physical-layer signal to interference plus noise ratio information obtained by configuring a reporting parameter, wherein the physical-layer signal to interference plus noise ratio information indicates to carry, in the report information, a physical-layer signal to interference plus noise ratio corresponding to a preferred beam.

In an embodiment, the target configuration information includes a reference signal resource index and beam quality information obtained by configuring a reporting parameter, wherein the reference signal resource index and the beam quality information indicate to carry, in the report information, a reference signal resource index, a measured reference signal received power and a predicted reference signal received power corresponding to a preferred beam. It can be understood that, the base station may add a new report parameter "SSBRI/CRI-RSRP1-RSRP2" in the reportQuantity field of the report configuration, that is, the same reference signal beam index SSBRI/CRI corresponds to two pieces of beam quality information RSRP1 and RSRP2, which respectively represent measured beam quality information obtained by beam measurement and predicted beam quality information obtained by the inference of the model. The base station compares the real measurement result and the model-based prediction result of the same beam according to the reported information "SSBR1/CRI-RSRP1-RSRP2", so as to determine whether the beam prediction performance of the model running on the UE is reliable.

As shown in Fig. 13, an embodiment of the present application further discloses a communication device, including: at least one processor 210 and at least one memory 220 for storing at least one program, wherein the beam reporting method as in any of the preceding embodiments is implemented when the at least one program is executed by the at least one processor 210.

An embodiment of the present application further discloses a computer readable storage medium, which stores a program executable by a processor, wherein the program executable by the processor, when being executed by the processor, causes the processor to perform the beam reporting method in any of the above embodiments.

An embodiment of the present application further discloses a computer program product, including a computer program or computer instructions, wherein the computer program or the computer instructions are stored in a computer readable storage medium, a processor of a computer device reads the computer program or the computer instructions from the computer readable storage medium, and executes the computer program or the computer instructions, so that the computer device executes the beam reporting method according to any one of the foregoing examples.

The system architecture and the application scenario described in the embodiments of the present application are intended to more clearly illustrate the technical solutions of the embodiments of the present application, and do not limit the technical solutions provided in the embodiments of the present application. It can be seen by those having ordinary skill in the art that, with the evolution of the system architecture and the emergence of new application scenarios, the technical solutions provided in the embodiments of the present application are applicable to similar technical problems.

Those having ordinary skill in the art can appreciate that all or some of the operations, systems, and functional blocks/units of the beam reporting methods disclosed above can be implemented as software, firmware, hardware, and any suitable combination thereof.

In a hardware implementation, the division between functional modules/units referred to in the above description does not necessarily correspond to the division of physical components. For example, one physical component may have multiple functions, or one function or operation may be cooperatively performed by several physical components. Some or all of the physical components may be implemented as software executed by a processor, such as a central processor, digital signal processor, or microprocessor, or as hardware, or as an integrated circuit, such as an application specific integrated circuit. Such software may be distributed on computer-readable media, which may include a computer storage medium (or a non-transitory medium), and a communication medium (or a transitory medium). As is well known to those having ordinary skill in the art, the term computer storage medium includes both volatile and nonvolatile, removable and non-removable medium implemented in any method or technology for storage of information (such as computer readable instructions, data structures, program modules, or other data). Computer storage medium includes, but is not limited to, RAM, ROM, EEPROM, flash memory or other memory technology, CD-ROM, Digital Versatile Discs (DVD) or other optical disk storage, magnetic cassettes, magnetic tape, magnetic disk storage or other magnetic storage devices, or any other medium which can be used to store the desired information and which can be accessed by a computer. In addition, communication media typically embodies computer readable instructions, data structures, program modules, or other data in a modulated data signal such as a carrier wave or other transport mechanism and may include any information delivery media as is known to those having ordinary skill in the art.

As used in this description, the terms "component", "module", "system", and the like are used to refer to a computer-related entity, hardware, firmware, a combination of hardware and software, software, or software in execution. For example, a component may be, but is not limited to being, a process running on a processor, a processor, an object, an executable, a thread of execution, a program, or a computer. By way of illustration, both an application running on a computing device and the computing device may be a component. One or more components may reside within a process or thread of execution and a component may be localized on one computer or distributed between two or more computers. Furthermore, these components may execute from a variety of computer readable medium having various data structures stored thereon. The components may communicate through local or remote processes, for example, in accordance with signals having one or more data packets (e.g., data from two components interacting with a local system, distributed system, or another component across a network, such as the Internet through which signals interact with other systems).

## Claims

1. A beam reporting method, comprising:
reporting target beam information to a first communication device according to a received high-layer parameter, wherein in a case where the high-layer parameter comprises a group-based beam reporting parameter, measured preferred beam information is reported to the first communication device through first group information, and predicted preferred beam information is reported to the first communication device through second group information.

2. The beam reporting method according to claim 1, wherein
there are one or more pieces of the measured preferred beam information, and each piece of the measured preferred beam information comprises at least one of a measured preferred reference signal resource index, a measured preferred reference signal received power, or a measured physical-layer signal to interference plus noise ratio;
and/or,
there are one or more pieces of the predicted preferred beam information, and each piece of the predicted preferred beam information comprises at least one of a predicted preferred reference signal resource index, a predicted preferred reference signal received power, or a predicted physical-layer signal to interference plus noise ratio.

3. The beam reporting method according to claim 1, further comprising:
reporting reference signal indication information to the first communication device, wherein the reference signal indication information indicates that a reference signal received power with a maximum numerical value is in a first position of the first group information or in a first position of the second group information.

4. The beam reporting method according to claim 3, wherein in a case where the reference signal indication information indicates that the reference signal received power with the maximum numerical value is in the first position of the first group information:
the measured preferred beam information comprises first measured beam information and second measured beam information, wherein the first measured beam information comprises a first measured reference signal resource index and a first measured reference signal received power, and the second measured beam information comprises a second measured reference signal resource index and a first reference signal received power difference, the first reference signal received power difference being a difference value between the first measured reference signal received power and a second measured reference signal received power corresponding to the second measured reference signal resource index, and the first measured reference signal received power being not less than the second measured reference signal received power;
the predicted preferred beam information comprises a third predicted reference signal resource index and a second reference signal received power difference, the second reference signal received power difference being a difference value between the first measured reference signal received power and a third predicted reference signal received power corresponding to the third predicted reference signal resource index, and the first measured reference signal received power being not less than the third predicted reference signal received power.

5. The beam reporting method according to claim 3, wherein in a case where the reference signal indication information indicates that the reference signal received power with the maximum numerical value is in the first position of the second group information:
the predicted preferred beam information comprises first predicted beam information and second predicted beam information, wherein the first predicted beam information comprises a first predicted reference signal resource index and a first predicted reference signal received power, and the second predicted beam information comprises a second predicted reference signal resource index and a third reference signal received power difference, the third reference signal received power difference being a difference value between the first predicted reference signal received power and a second predicted reference signal received power corresponding to the second predicted reference signal resource index, and the first predicted reference signal received power being not less than the second predicted reference signal received power;
the measured preferred beam information comprises a third measured reference signal resource index and a fourth reference signal received power difference, the fourth reference signal received power difference being a difference value between the first predicted reference signal received power and a third measured reference signal received power corresponding to the third measured reference signal resource index, and the first predicted reference signal received power being not less than the third measured reference signal received power.

6. The beam reporting method according to claim 1, further comprising:
receiving intra-group beam number indication information sent by the first communication device, wherein the intra-group beam number indication information indicates a number of pieces of the measured preferred beam information carried by the first group information and a number of pieces of the predicted preferred beam information carried by the second group information.

7. The beam reporting method according to claim 1, further comprising:
receiving reporting parameter type indication information sent by the first communication device, wherein the reporting parameter type indication information indicates a type of beam measurement information carried by the first group information and a type of beam measurement information carried by the second group information.

8. The beam reporting method according to claim 7, wherein the type of the beam measurement information comprises:
a reference signal resource index and a reference signal received power;
or,
a reference signal resource index and a physical-layer signal to interference plus noise ratio;
or,
a reference signal resource index.

9. The beam reporting method according to claim 1, wherein a number of quantization bits of the measured preferred beam information and a number of quantization bits of the predicted preferred beam information are different.

10. The beam reporting method according to claim 9, wherein
the measured preferred beam information comprises fourth measured beam information and fifth measured beam information, wherein the fourth measured beam information comprises a fourth measured reference signal resource index and a fourth measured reference signal received power, and the fifth measured beam information comprises a fifth measured reference signal resource index and a fifth reference signal received power difference, the fifth reference signal received power difference being a difference value between the fourth measured reference signal received power and a fifth measured reference signal received power corresponding to the fifth measured reference signal resource index, and the fourth measured reference signal received power being not less than the fifth measured reference signal received power;
the predicted preferred beam information comprises fourth predicted beam information and fifth predicted beam information, wherein the fourth predicted beam information comprises a fourth predicted reference signal resource index and a fourth predicted reference signal received power, and the fifth predicted beam information comprises a fifth predicted reference signal resource index and a sixth reference signal received power difference, the sixth reference signal received power difference being a difference value between the fourth predicted reference signal received power and a fifth predicted reference signal received power corresponding to the fifth predicted reference signal resource index, and the fourth predicted reference signal received power being not less than the fifth predicted reference signal received power.

11. The beam reporting method according to claim 1, further comprising:
in a case where the high-layer parameter does not comprise the group-based beam reporting parameter, determining validity of a model running on the second communication device; and
reporting the target beam information to the first communication device according to the validity.

12. The beam reporting method according to claim 11, wherein
in a case where the validity is invalid, the target beam information comprises one or more pieces of mutually different measured preferred beam information;
or,
in a case where the validity is valid, the target beam information comprises measured preferred beam information and predicted preferred beam information corresponding to a same reference signal resource index.

13. The beam reporting method according to claim 12, wherein in a case where the target beam information comprises the measured preferred beam information and the predicted preferred beam information corresponding to the same reference signal resource index:
the measured preferred beam information comprises the reference signal resource index and a measured reference signal received power, and the predicted preferred beam information comprises the reference signal resource index and a predicted reference signal received power;
or,
the measured preferred beam information comprises the reference signal resource index and a measured physical-layer signal to interference plus noise ratio, and the predicted preferred beam information comprises the reference signal resource index and a predicted physical-layer signal to interference plus noise ratio;
or,
the measured preferred beam information comprises the reference signal resource index and a measured reference signal received power, and the predicted preferred beam information comprises the reference signal resource index;
or,
the measured preferred beam information comprises the reference signal resource index and a measured physical-layer signal to interference plus noise ratio, and the predicted preferred beam information comprises the reference signal resource index.

14. The beam reporting method according to claim 13, wherein in a case where the measured preferred beam information comprises the reference signal resource index and the measured reference signal received power, and the predicted preferred beam information comprises the reference signal resource index, other bits in the predicted preferred beam information except bits occupied by the reference signal resource index are used as extension bits for reporting the measured reference signal received power or extension bits for reporting other reference signal received power.

15. The beam reporting method according to claim 1, further comprising:
receiving target configuration information sent by the first communication device; and
sending report information to the first communication device according to the target configuration information, wherein the report information comprises the target beam information.

16. The beam reporting method according to claim 15, wherein the target configuration information comprises model validity information, wherein the model validity information indicates to carry, in the report information, validity information of a model running on the second communication device.

17. The beam reporting method according to claim 16, wherein
a value of the validity information being a first preset value indicates that validity of the model running on the second communication device is valid;
or,
a value of the validity information being a second preset value indicates that the validity of the model running on the second communication device is invalid.

18. The beam reporting method according to claim 15, wherein
the target configuration information comprises reference signal resource quantity information, wherein the reference signal resource quantity information indicates to carry, in the report information, a number of reference signal resources required by a model running on the second communication device;
or,
the target configuration information comprises beam position indication information, wherein the beam position indication information indicates to carry, in the report information, preferred beam information of a corresponding position;
or,
the target configuration information comprises reference signal resource index information obtained by configuring a reporting parameter, wherein the reference signal resource index information indicates to carry, in the report information, a reference signal resource index corresponding to a preferred beam;
or,
the target configuration information comprises reference signal received power information obtained by configuring a reporting parameter, wherein the reference signal received power information indicates to carry, in the report information, a reference signal received power corresponding to a preferred beam;
or,
the target configuration information comprises physical-layer signal to interference plus noise ratio information obtained by configuring a reporting parameter, wherein the physical-layer signal to interference plus noise ratio information indicates to carry, in the report information, a physical-layer signal to interference plus noise ratio corresponding to a preferred beam;
or,
the target configuration information comprises a reference signal resource index and beam quality information obtained by configuring a reporting parameter, wherein the reference signal resource index and the beam quality information indicate to carry, in the report information, a reference signal resource index, a measured reference signal received power and a predicted reference signal received power corresponding to a preferred beam.

19. A communication device, comprising:
at least one processor; and
at least one memory for storing at least one program, wherein
the at least one program, when being executed by the at least one processor, causes the at least one processor to execute the beam reporting method according to any one of claims 1 to 18.

20. A computer readable storage medium, which stores a program executable by a processor, wherein the program executable by the processor, when being executed by the processor, causes the processor to perform the beam reporting method according to any one of claims 1 to 18.

21. A computer program product, comprising a computer program or computer instructions, wherein the computer program or the computer instructions are stored in a computer readable storage medium, a processor of a computer device reads the computer program or the computer instructions from the computer readable storage medium, and executes the computer program or the computer instructions, so that the computer device executes the beam reporting method according to any one of claims 1 to 18.
